# EUROPEAN PATENT SPECIFICATION

(11) **EP 3 959 705 B1**
(45) Date of publication and mention of the grant of the patent: **24.04.2024**
(21) Application number: 20841571.1
(22) Date of filing: 23.04.2020
(51) Int. Cl.: G05D 1/06, G08G 5/00, G05D 1/02, G01S 13/95

(54) **SYSTEM AND METHOD FOR AUTOMATED TAKE-OFF AND LANDING OF A HIGH ALTITUDE LONG ENDURANCE AIRCRAFT BASED ON THE LOCAL ENVIRONMENT**
SYSTEM UND VERFAHREN FÜR AUTOMATISIERTEN START UND LANDUNG EINES LUFTFAHRZEUGS IN GROSSER HÖHE MIT LANGER AUSDAUER AUF DER GRUNDLAGE DER LOKALEN UMGEBUNG
SYSTÈME ET PROCÉDÉ DE DÉCOLLAGE ET D'ATTERRISSAGE AUTOMATISÉS D'UN AÉRONEF À HAUTE ALTITUDE À GRANDE AUTONOMIE BASÉS SUR L'ENVIRONNEMENT LOCAL

(30) Priority: 25.04.2019 US 201962838783 P; 25.04.2019 US 201962838833 P; 31.05.2019 US 201962855613 P
(43) Date of publication of application: 02.03.2022
(73) Proprietor: AeroVironment, Inc., Arlington, VA 22202 (US)
(72) Inventor: LISOSKI, Derek, Simi Valley, CA 93065-0906 (US); HIBBS, Bart, Dean, Simi Valley, CA 93065-0906 (US)
(74) Representative: Dehns
(86) International application number: PCT/US2020/029665
(87) International publication number: WO 2021/011047

(56) References cited:
- US-A1- 2013 062 457
- US-A1- 2014 032 034
- US-A1- 2014 339 356
- US-A1- 2015 339 930
- US-A1- 2016 307 448
- US-A1- 2017 248 969
- US-A1- 2017 278 409
- US-A1- 2018 061 251
- US-A1- 2018 102 057

## Description

### TECHNICAL FIELD

The invention relates generally to Unmanned Aerial Vehicles (UAVs), and more particularly to take-off and landing of UAVs.

### BACKGROUND

Unmanned aerial vehicles (UAVs) are lightweight planes that are capable of controlled, sustained flight. UAVs may be associated with a ground-based controller for two-way communications for general flight pattern management. UAV aircraft may be large, yet light and it may be a challenge for these aircraft to take-off and land in suboptimal weather conditions. Furthermore, UAV aircraft may be especially susceptible to local atmospheric conditions.

US 2014/032034 A1 discloses UAVs for delivery systems, wherein a ground station can communicate guidance data to the UAVs to more actively control their landings.

### SUMMARY

Viewed from a first aspect, there is provided a system as claimed in claim 1.

The system may include: at least one sonic detection and ranging (SODAR) sensor disposed proximate the ground control station, where the at least one SODAR sensor may be in communication with the at least one communication device, and where the one or more local weather conditions comprise weather data from the at least one SODAR sensor. The one or more local weather conditions may comprise a wind speed and a wind speed gradient, and the determined flight pattern comprises a glide slope, a nominal descent rate, a turn rate, and an altitude. The current position of the UAV may be based on a global positioning system (GPS) receiver of the UAV in communication with one or more pseudolites disposed proximate a landing area.

Viewed from a second aspect, a method as claimed in claim 6 is provided.

The method may further include: sending, by at least one sonic detection and ranging (SODAR) sensor disposed proximate the ground control station, the one or more local weather conditions from the at least one SODAR sensor to the at least one communication device. The one or more local weather conditions may comprise a wind speed and a wind speed gradient, and where the determined flight pattern comprises a glide slope, a nominal descent rate, a turn rate, and an altitude. The current position of the UAV may be based on a global positioning system (GPS) receiver of the UAV in communication with one or more pseudolites disposed proximate a landing area.

### BRIEF DESCRIPTION OF THE DRAWINGS

The components in the figures are not necessarily to scale, emphasis instead being placed upon illustrating the principals of the invention. Like reference numerals designate corresponding parts throughout the different views. Embodiments are illustrated by way of example and not limitation in the figures of the accompanying drawings, in which:
FIG. 1 depicts a system for modifying take-off and landing patterns for an unmanned aerial vehicle, according to one embodiment;
FIG. 2 illustrates a top-level functional block diagram of a computing device associated with an operator at a ground control station, according to one embodiment;
FIG. 3 illustrates a top-level functional block diagram of a computing device of an unmanned aerial vehicle of FIG. 1, according to one embodiment;
FIG. 4 depicts a system for a modified landing pattern of the unmanned aerial vehicle of FIG. 1 based on conditions of the local environment, according to one embodiment;
FIG. 5 depicts a system for a modified take-off pattern of the unmanned aerial vehicle of FIG. 1 based on conditions of the local environment, according to one embodiment;
FIG. 6 depicts a flow diagram of a method for modifying take-off and landing patterns for an unmanned aerial vehicle, according to one embodiment;
FIG. 7 shows a high-level block diagram and process of a computing system for implementing an embodiment of the system and process;
FIG. 8 shows a block diagram and process of an exemplary system in which an embodiment may be implemented; and
FIG. 9 depicts a cloud computing environment for implementing an embodiment of the system and process disclosed herein.

### DETAILED DESCRIPTION

The following description is made for the purpose of illustrating the general principles of the embodiments discloses herein and is not meant to limit the concepts disclosed herein. Further, particular features described herein can be used in combination with other described features in each of the various possible combinations and permutations. Unless otherwise specifically defined herein, all terms are to be given their broadest possible interpretation including meanings implied from the description as well as meanings understood by those skilled in the art and/or as defined in dictionaries, treatises, etc.

A system and method disclosed herein provide for modifying take-off and landing patterns for an unmanned aerial vehicle (UAV) based on conditions of the local environment. In one embodiment, the UAV is a high altitude long endurance solar-powered aircraft. The system may be an automated process for modifying a landing pattern based on a variety of data inputs, such as local weather and UAV position. Position data may be acquired from pseudo-satellites or "pseudolites", which operate analogously to GPS satellites; however, they may operate on or near the ground. More specifically, pseudolites are typically small transceivers that are used to create a local, ground-based global positioning system. In one embodiment, a plurality of pseudolites may be located around a runway and/or take-off and landing location so that a GPS receiver onboard the UAV may receive signals from the pseudolites. Since the exact location of each pseudolite is known and does not change, the pseudolites form a highly accurate position locator system. In another embodiment, a flight control computer (FCC) onboard the UAV may be configured to have its own GPS system configured to receive positional data from satellites.

A computing device associated with a ground control station may be configured to receive weather data. The data may include sonic detection and ranging or "SODAR" data and/or light detection and ranging or "LIDAR" data at the ground control station. SODAR technology is a wind sensing technique, whereby the scattering of sound waves by atmospheric turbulence is measured. The technique is similar to SONAR, but used in air rather than water. Other methods are possible and contemplated, such as light detection and ranging or "LIDAR". In one embodiment, the ground control station computing device may be configured to process the SODAR data to determine a UAV heading when the UAV is approaching for landing, and where the UAV needs to be relative to the landing site. For example, if winds are stronger than the flight speed at a particular altitude, the UAV may need to be upwind of the landing site. The ground control station computing device determines exactly where the UAV needs to be located if the UAV is oriented in a certain direction in order to land at the desired location. In another example, the SODAR data may be transmitted directly to the FCC, the FCC being configured to receive the SODAR data (and other inputs) to perform flight pattern modification. For example, the FCC may be configured to execute a wind triangle method to determine the UAV's ground track vector and air speed vector, and the difference between the two may provide the wind vector. In one embodiment, this method may provide corrections to the SODAR data.

SODAR may provide a vertical wind speed profile up to roughly 200 meters. In another embodiment, the SODAR vertical wind profile may extend significantly higher. The SODAR sensors on the ground can be used in conjunction with local weather data and position data, e.g., position data from the pseudolites, to give an indication of where the UAV may be located relative to the desired landing site or where the UAV may be located within the UAV's flight pattern. This is desired for landing a low-speed UAV in high winds.

In operation, the ground control station computing device may know the particular place and direction of flight for the UAV to touch the ground, and based on the nominal descent rate of the UAV and the turn rate limitations and weather and wind conditions the ground control station computing device back-calculates all of the flight plan waypoints until the ground control station computing device determines the desired starting position for the UAV. The ground control station computing device operates to have the UAV automatically fly a landing pattern based on those waypoints. The system may be interactive in the sense that as the UAV is flying a particular flight pattern, the system may regenerate a new flight plan based on a constant recalculation of current position and local weather. In another embodiment, the back calculation may be executed by the FCC at the UAV.

In general, when wind speeds increase, the flight pattern may need to be modified in order to land the UAV at the desired landing site. Typically, a downwind leg may be flown first, then a turn-in is started, and that turn-in may be maintained until the UAV flies towards a final landing. For the UAV, the rate of speed may not necessarily be held steady; therefore, the flight pattern may be adjusted, e.g., perform a wider turn, to adjust to wind velocity and to land at the desired location. The flight pattern modification allows the UAV to land in winds up to 75% of flight speed. This is advantageous for very slow-moving UAV, such as the high altitude long endurance aircraft. Therefore, it may be possible to travel at speeds close to wind speed and still land slowly into the wind without requiring a pilot in these conditions.

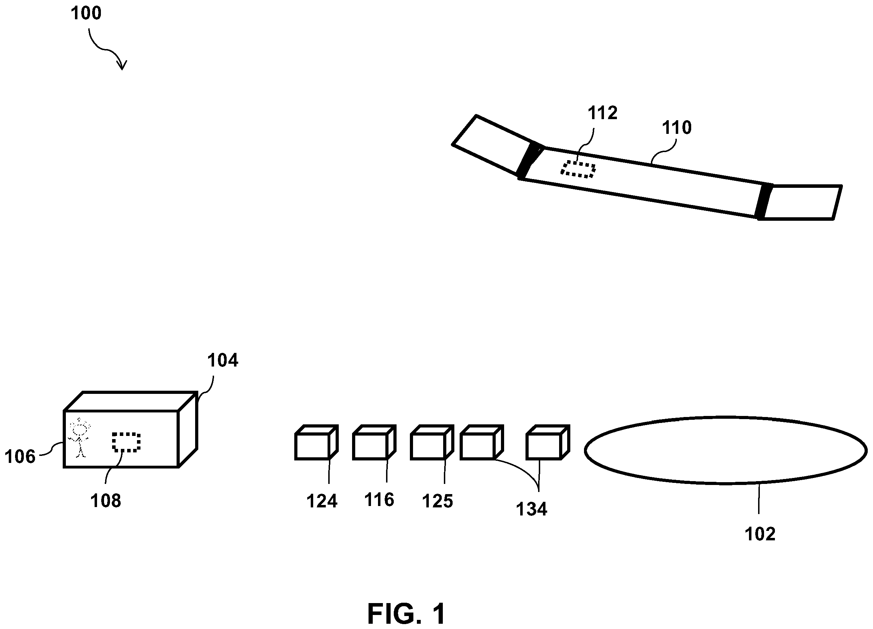

With reference to FIG. 1, a system 100 for modifying take-off and landing patterns for an unmanned aerial vehicle (UAV) 110 based on conditions of the local environment is illustrated. UAVs are aircraft with no onboard pilot and may fly autonomously or remotely. In one embodiment, the UAV 110 is a high altitude long endurance aircraft. The UAV 110 may have between one and forty motors and a wingspan between 100 feet and 400 feet. In one embodiment, the UAV 110 may have a wingspan of approximately 260 feet and is propelled by ten electric motors powered by a solar array covering at least a portion of the surface of the wing, resulting in zero emissions. Flying at an altitude of approximately 65,000 feet above sea level and above the clouds, the UAV 110 is designed for continuous, extended missions of up to months without landing. In another embodiment, the UAV 110 may fly at 60,000 feet above sea level.

The UAV 110 functions optimally at high altitude due at least in part to the lightweight payload of the UAV and is capable of considerable periods of sustained flight without recourse to land. In one embodiment, the UAV 110 may weigh approximately 3,000 lbs and may include wing panel sections and a center panel, providing for efficient assembly and disassembly of the UAV 110 due to the attachability and detachability of the wing panel sections to each other and/or to the center panel.

The system 100 may be an automated, autonomous, or semi-autonomous process for modifying a landing pattern based on a variety of data inputs, such as local weather and UAV position. UAVs, such as UAV 110, often need to land in suboptimal weather conditions, such as high winds. In one embodiment, a landing pattern of the UAV 110 is modified based on the local environmental conditions. In another embodiment, a take-off pattern of the UAV 110 is modified based on local environmental conditions.

In one embodiment, the landing area 102 is of a circular shape allowing for approach and take-off from the landing area 102 in any direction. Other landing area shapes are possible and contemplated. The landing area may be paved with asphalt or concrete. In other embodiment, the landing area may be made of grass or another organic material.

The UAV 110 may fly in a large, sweeping geostationary pattern within the stratospheric layer of the atmosphere over a ground control station 104, taking advantage of wind patterns at high altitude. The ground control station 104 may be the central hub for UAV control. In one embodiment, there may be more than one ground control station 104. In one embodiment, the UAV 110 may be within a beam width of a global positioning system (GPS) 134 associated with the ground control station 104.

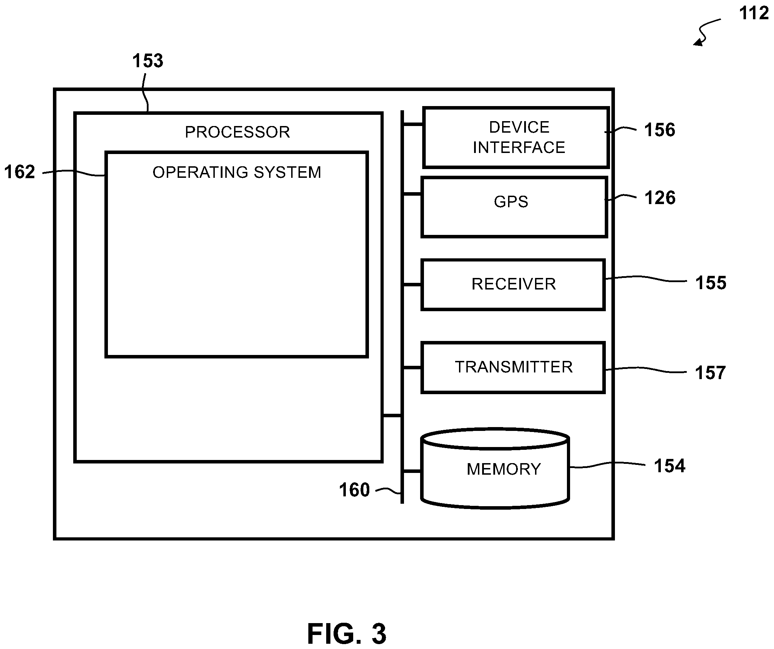

The system 100 for modifying take-off and landing patterns for the UAV 110 may be based at least in part on the position data of the UAV 110. In one embodiment, the GPS 134 may be a plurality of pseudo-satellites or "pseudolites". Pseudolites operate analogously to GPS satellites; however, the pseudolites may operate on or near the ground. More specifically, pseudolites 134 are small transceivers that are used to create a local, ground-based global positioning system. In one embodiment, the GPS pseudolites 134 may be located around a runway so a GPS receiver, such as GPS receiver 126 of FIG. 3, onboard the UAV 110 may receive signals from the pseudolites 134. Since the exact location of each pseudolite 134 is known and does not change, the pseudolites 134 are a highly accurate position locator system.

An operator 106 at the ground control station 104 may use the UAV 110 position estimated from the GPS pseudolites 134 to calculate the relative UAV 110 position. A terrestrial RF emitter 124 may emit signals to the UAV 110 so the UAV 110 may know the location of the ground control station 104 and/or a landing site. Other emitters configured for terrestrial communication with the UAV 110 may be included, such as a visual band emitter.

In another embodiment, the UAV 110 includes its own GPS receiver 126, as shown in FIG. 3, for calculating the UAV's 110 position. The UAV 110 may communicate its position data to the ground control station 104 over a terrestrial RF receiver 125 in communication with the ground control station 104.

The system 100 for modifying take-off and landing patterns for the UAV 110 may also be based at least in part on wind speed conditions of the local environment. Wind speed data may be sensed by a wind sensing apparatus 116. In one embodiment, the wind sensing apparatus 116 may include sonic detection and ranging or "SODAR" sensors and/or light detection and ranging or "LIDAR" sensors proximate the ground control station 104. SODAR technology is a wind sensing technique, whereby the scattering of sound waves by atmospheric turbulence are measured. The technique is similar to SONAR, but used in air rather than water. Other methods are possible and contemplated, such as light detection and ranging or "LIDAR".

SODAR can provide a vertical wind speed profile up to roughly 200 meters. In another embodiment, the SODAR vertical wind profile may extend significantly higher. The SODAR sensors 116 on the ground can be used in conjunction with local weather data and position data (e.g., position data obtained from the UAV 110 using GPS or the pseudolites 134) to give an indication of what the landing (or take-off) pattern should be. That is desired for landing a low-speed UAV in high winds.

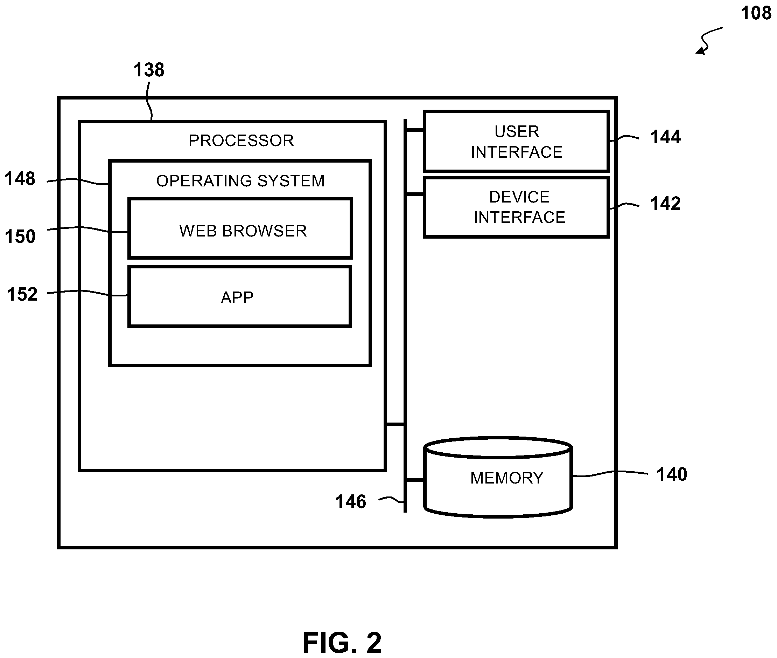

In one embodiment, an operator 106 is located at the ground control station 104 for modifying take-off and landing patterns of the UAV 110. In another embodiment, more than one operator is possible for modifying take-off and landing patterns of the UAV 110. The operator 106 controls the modification of the UAV 110 from one flight pattern to another flight pattern, based primarily on the wind speed and position of the UAV 110. For example, the operator 116 may use the SODAR data to determine the UAV 110 heading when the UAV 110 is approaching for landing, and where the UAV 110 needs to be relative to the landing site 102. For example, if winds are stronger than the flight speed at a particular altitude, the UAV 110 may need to be upwind of the landing site 102. While the operator 106 is depicted as a person, the operator 106 may be a processor having addressable memory, such as shown in FIG. 2. The control of the UAV 110 may be via the operator 106 in some embodiments. In other embodiments, control of the UAV 110 may be via the ground control 104, an autonomous system, a semi-autonomous system, or the like. In some embodiments, the ground control station 104 may include the RF emitter 124, SODAR and/or LIDAR sensor 116, terrestrial RF receiver 125, and/or pseudolites 134. In other embodiments, the ground control station 104 may be in communication with the RF emitter 124, SODAR and/or LIDAR sensor 116, terrestrial RF receiver 125, and/or pseudolites 134.

FIG. 2 illustrates an example of a top-level functional block diagram of a computing device 108 operated by the operator 106. The computing device 108 comprises a processor 138, such as a central processing unit (CPU), addressable memory 140, an external device interface 142, e.g., an optional universal serial bus port and related processing, and/or an Ethernet port and related processing, and an optional user interface 144, e.g., an array of status lights and one or more toggle switches, and/or a display, and/or a keyboard and/or a pointer-mouse system and/or a touch screen. Optionally, the addressable memory may, for example, be: flash memory, eprom, and/or a disk drive or other hard drive. These elements may be in communication with one another via a data bus 146. In some embodiments, via an operating system 148 such as one supporting a web browser 150 and applications 152, the processor 138 may be configured to execute steps of a process establishing a communication channel. For example, the processor 138 may be in communication with the pseudolites 134 to process the received position data of the UAV 110. The processor may be further configured to process wind speed data received from the SODAR and/or LIDAR sensor 116.

Since a UAV does not have an onboard pilot, a flight control computer (FCC) 112 onboard the UAV is the central intelligence of the UAV 110. The FCC 112 may partially or completely control much of the functionality of the UAV 110, such as changing direction (e.g., flight pattern) based on commands received from the operator 106.

FIG. 3 illustrates an example of a top-level functional block diagram of the FCC 112 of the UAV aircraft 110. The FCC 112 comprises at least a processor 153, such as a central processing unit (CPU), addressable memory 154, an external device interface 156, e.g., an optional universal serial bus port and related processing, and/or an Ethernet port and related processing, and an optional user interface 158, e.g., an array of status lights, sensors and one or more toggle switches. Optionally, the addressable memory may, for example, be: flash memory, eprom, and/or a disk drive or other hard drive. These elements may be in communication with one another via a data bus 160. In one embodiment, the FCC 110 may have a suite of sensors for measuring the current flight status and health status of the UAV.

In some embodiments, via an operating system 162 such as one supporting applications 164, the processor 153 may be configured to execute steps of a process establishing a communication channel. For example, the processor 153 may be in communication with a receiver 155 configured to receive a command signal from the computing device 108. In one embodiment, a command signal to modify a landing pattern is received by the receiver 155, and the processor executes steps to cause the UAV 110 to transition from a current landing pattern to a different landing pattern. In another embodiment, the command signal is to modify the take-off flight pattern and is received by the receiver 155. The processor 153 executes steps to cause the UAV 110 to modify its take-off pattern to a new take-off pattern based on the local environmental conditions, such as wind speed.

The FCC 112 may further be connected to or in communication with the global positioning system (GPS) 126 configured for receiving position data from a constellation of satellites. Still further, the FCC 112 may include a transmitter 157 for transmitting to the ground GPS correction information and/or transmitting to the ground translated GPS signals in an auxiliary frequency band to the terrestrial RF receiver 125 in cooperation with the pseudolites 134.

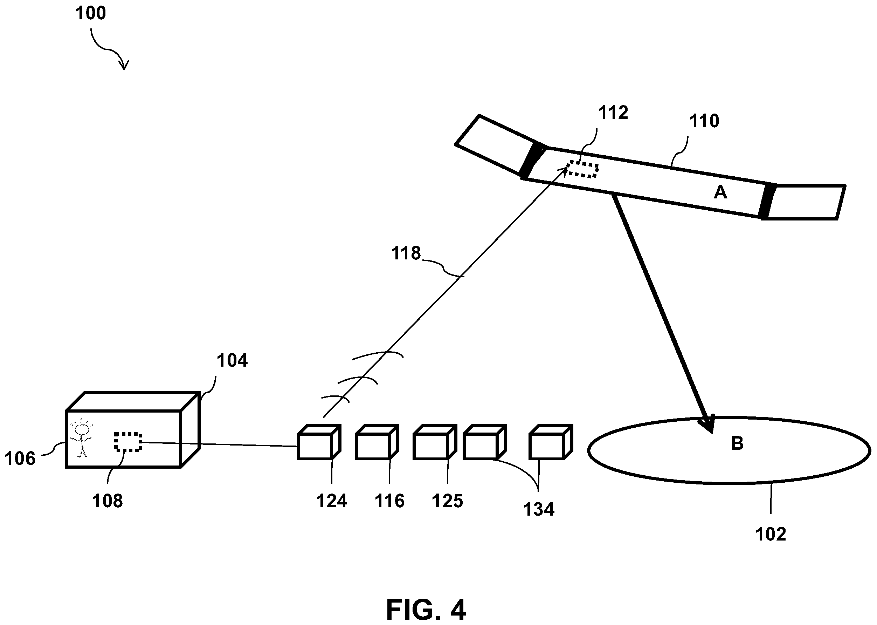

With respect to FIG. 4, a modified landing pattern for the UAV 110 based on conditions of the local environment is illustrated. In general, when wind speeds increase, the flight pattern may need to be modified in order to land the UAV 110 at the desired landing site, such as position B at the landing site 102. A downwind leg may be flown first then a turn-in may be started. The turn-in may be maintained until the UAV 110 flies towards final landing. For the UAV 110, the rate of speed may not necessarily be held steady. Therefore, the flight pattern may be adjusted, e.g., perform a wider turn, to adjust to wind velocity and to land at the desired location. The flight pattern modification allows the UAV 110 to land in winds up to 75% of flight speed. This is advantageous for very slow-moving aircraft, such as the UAV 110. Therefore, it may be possible to travel at speeds close to wind speed and still land slowly without requiring a pilot in these conditions.

In one embodiment, the ground control station 104 computing device 108 may be configured to process SODAR and/or LIDAR data to determine the desired UAV heading when the UAV 110 is approaching for landing, and where the UAV 110 needs to be relative to the landing site 102. For example, if winds are stronger than the flight speed at a particular altitude, the UAV 110 may need to be upwind of the landing site 102, such as at position A. The ground control station 104 computing device 108 may determine exactly where the UAV 110 needs to be if the UAV 110 is to be oriented in a certain direction in order to land at the desired location B. In one embodiment, position A may be determined based on the wind speed and wind speed gradient, glide slope, nominal descent rate, and the turn rate of the UAV 110. The computing device 108 may integrate all of the data points over time and altitude until the device 108 arrives at the desired starting position A for the UAV 110. The operator 106 operates the computing device 108 to have the UAV 110 automatically fly a landing pattern based on those data points. More specifically, the operator transmits a command signal 118 via the RF emitter 124 to the FCC 112 onboard the UAV 110 to follow the determined heading. The system 100 may be interactive in the sense that as the UAV 110 is flying a particular flight pattern, the system may regenerate a new flight plan based on a constant recalculation of current position and local weather. In another embodiment, the back calculation may be executed by the FCC 112 at the UAV 110.

In another embodiment, the SODAR and/or LIDAR data may be transmitted directly to the FCC 112, the FCC 112 being configured to receive the SODAR and/or LIDAR data, and other inputs from the RF emitter 124, to perform flight pattern modification. For example, the FCC 112 may be configured to execute a wind triangle method to determine the UAV's ground track vector and air speed vector, and the difference between the two may provide the wind vector. The airspeed vector plus the wind speed vector equals the ground track vector. When you draw the airspeed vector, the wind speed vector, and the ground track vector, they form a closed triangle in the wind triangle method. In one embodiment, this method may provide corrections to the SODAR and/or LIDAR data.

It is important to distinguish between a landing pattern (LP) and an approach pattern (AP). The AP may need not be as fine-tuned as the LP measurements, because the AP is based more on general weather that is farther away, whereas the LP weather is more localized. The AP may be generated to keep the UAV 110 out of suspected high turbulence areas even if the weather measurements in that region are not known to high accuracy.

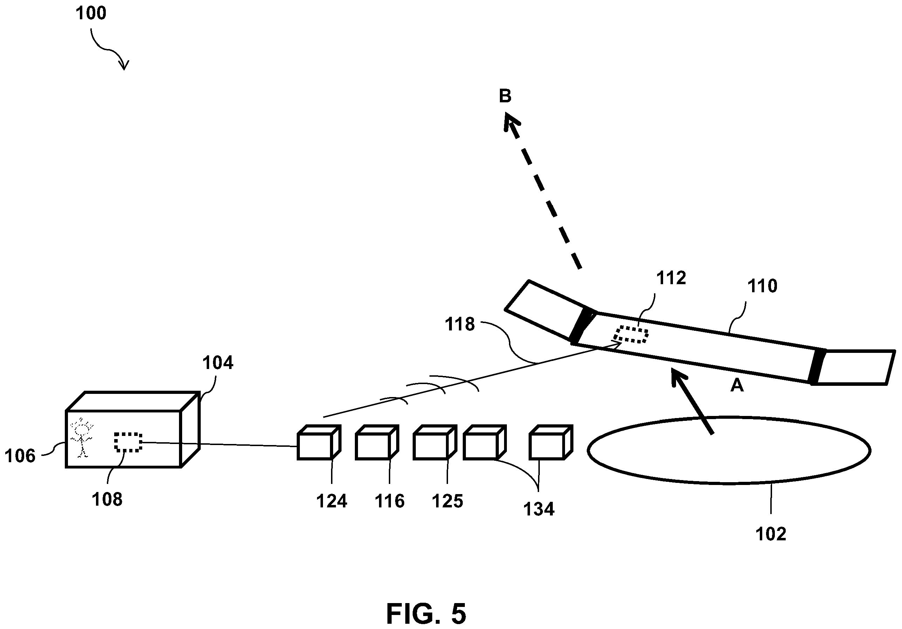

With respect to FIG. 5, a modified take-off pattern for the UAV 110 based on conditions of the local environment is illustrated. In one embodiment, when wind speeds increase, the flight pattern may need to be modified in order to arrive at a desired position B. More specifically, the operator transmits a command signal 118 via the RF emitter 124 to the FCC 112 onboard the UAV 110 to follow a determined heading based on the local wind speed. As the UAV 110 is taking off, the system may regenerate a new flight plan based on a constant recalculation of current position, such as position A, and local weather conditions. In one embodiment, position B may be determined based on the wind speed and wind speed gradient, nominal climb rate and the turn rate of the UAV 110. The computing device 108 may integrate all of the data points over time and altitude until the device 108 arrives at the desired ending position B for the UAV 110. The operator 106 operates the computing device 108 to have the UAV 110 automatically fly a take-off pattern based on those data points. More specifically, the operator transmits the command signal 118 via the RF emitter 124 to the FCC 112 onboard the UAV 110 to follow the determined heading. The system 100 may be interactive in the sense that as the UAV 110 is flying a particular flight pattern, the system may regenerate a new flight plan based on a constant recalculation of current position and local weather. In another embodiment, the integration may be executed by the FCC 112 at the UAV. In some embodiments, altitude may be more critical for landing than for take-off of the UAV as the FCC is trying to land the UAV on the ground, i.e., altitude = 0, in a specific spot. In some embodiments, for take-off of the UAV, the altitude can be whatever the climb rate of the UAV dictates as long the UAV is not so low that the UAV risks hitting obstacles. In some embodiments, the FCC may need data on a wind direction and a wind gradient to know what the departure altitude profile will look like and plan an optimal departure path to avoid obstacles.

In one embodiment, the SODAR and/or LIDAR data may be transmitted directly to the FCC 112, the FCC 112 being configured to receive the SODAR and/or LIDAR data and other inputs from the RF emitter 124 to perform flight pattern modification. For example, the FCC 112 may be configured to execute a wind triangle method to determine the UAV's ground track vector and air speed vector, and the difference between the two may provide the local wind vector and may be used to correct or modify the SODAR and/or LIDAR data.

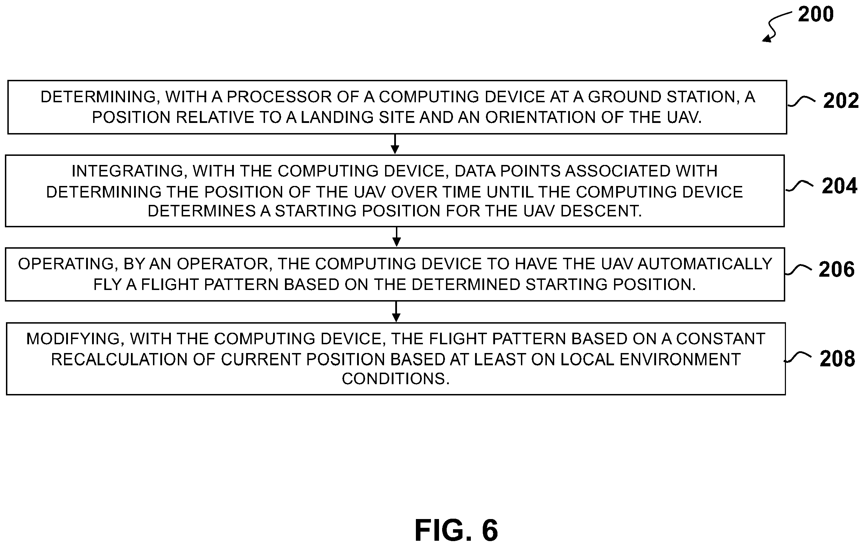

With respect to FIG. 6, a flowchart for a method 200 of modifying a landing pattern for an unmanned aerial vehicle (UAV) based on conditions of the local environment is illustrated. A ground control station computing device may be configured to determine a heading and orientation of the UAV based on the local environment. In one embodiment, the data is sonic detection and ranging (SODAR) data. In another embodiment, the data is light detection and ranging (LIDAR) data. In one embodiment, if winds are stronger than the flight speed at a particular altitude, the UAV may need to be upwind of the landing site. In general, when wind speeds increase, the flight pattern may need to be modified in order to land a UAV at the desired landing site. A downwind leg may be flown first then a turn-in may be started. The downwind leg may be a long level flight path parallel to but in the opposite direction of a landing runway or landing location. The turn-in may be maintained until the UAV flies towards final. For the UAV, the rate of speed may not necessarily be held steady; therefore, the flight pattern may be adjusted (e.g., perform a wider turn) to adjust to wind velocity and to land at the desired location. The flight pattern modification allows the UAV to land in winds up to 75% of flight speed. This is advantageous for very slow-moving aircraft, such as the UAV. Therefore, it may be possible to travel at speeds close to wind speed and still land slowly without requiring a pilot in these conditions.

The ground control station computing device may determine a position relative to a landing site and an orientation of the UAV (step 202). The computing device determines exactly where the UAV needs to be if the UAV is to be oriented in a certain direction in order to land at the landing site. In one embodiment, the position may be determined based on local environment conditions such as wind speed and wind speed gradient, glide slope, nominal descent rate, and the turn rate of the UAV. Local environmental conditions are used to adjust a traffic pattern size so that at the nominal descent rate, the UAV will land on the ground in the desired spot. The glideslope relative to the ground, i.e., length of the final approach leg, depends on the head wind speed and wind gradient. The width of the pattern depends on the crosswind component and the selected turn rate. The altitude depends on the desired descent rate. The throttle and regen (drag) adjustments are used to adjust for variation in the wind, lift/sinking air and UAV performance. The computing device may integrate all of the data points associated with determining the position and heading of the UAV over time until the computing device arrives at the desired starting position for the UAV descent (step 204). In one embodiment, the data includes at least the wind speed and wind speed gradient, glide slope, nominal descent rate, the turn rate, and altitude.

An operator operates the computing device to have the UAV automatically fly a flight pattern based on the determined starting position (step 206). In one embodiment, the operator is a processor the ground control station. In one embodiment, the control of the UAV is by an operator, autonomous, or semi-autonomous. In one embodiment, the flight pattern is a landing pattern. In another embodiment, the flight pattern is an approach pattern. In one embodiment, the operator transmits a command signal via a radio frequency (RF) emitter to a flight control computer (FCC) onboard the UAV to follow the determined heading. In one embodiment, the system may be interactive. As the UAV is flying a particular flight pattern, the system may regenerate a new flight plan based on a constant recalculation of current position based on local environment conditions (step 208). In another embodiment, the back calculation may be executed by the FCC at the UAV.

In another embodiment, the SODAR and/or LIDAR data may be transmitted directly to the FCC, the FCC being configured to receive the SODAR and/or LIDAR data (and other inputs from the RF emitter) to perform flight pattern modification. For example, the FCC may be configured to execute a wind triangle method to determine the UAV's ground track vector and air speed vector, and the difference between the two may provide the wind vector. In one embodiment, this method may provide corrections to the SODAR and/or LIDAR data.

It is important to distinguish between a landing pattern (LP) and an approach pattern (AP). In some embodiments, the AP may need not be as fine-tuned as the LP measurements, because the AP is based more on general weather that is farther away, whereas the LP weather is more localized. The AP may be generated to keep the UAV out of suspected high turbulence areas even if the weather measurements in that region are not known to high accuracy. Approach pattern is how to approach the aircraft from far away to get to the first point in the local landing pattern at the desired altitude, airspeed, and heading. The approach pattern provides a coarser resolution element of an overall aircraft recovery operation. In some embodiments, the approach pattern could be started from 100 miles away from the runway. The landing pattern may be more precise and carefully defined and may typically be entirely within a mile or so of the runway.

An alternative method may include a modified take-off pattern for the UAV based on conditions of the local environment. In one embodiment, when wind speeds increase, the flight pattern may need to be modified in order to arrive at a desired ending position. More specifically, the operator transmits a command signal via the RF emitter to the FCC onboard the UAV to follow a determined heading based on the local wind speed. As the UAV is taking off, the system may regenerate a new flight plan based on a constant recalculation of current position and local weather conditions. In one embodiment, the desired ending position may be determined based on the wind speed (and wind speed gradient), nominal climb rate and the turn rate of the UAV. The computing device may integrate all of the data points over time and altitude until the device arrives at the desired ending position for the UAV. The operator operates the computing device to have the UAV automatically fly a take-off pattern based on those data points. More specifically, the operator transmits the command signal via the RF emitter to the FCC onboard the UAV to follow the determined heading. The system may be interactive in the sense that as the UAV is flying a particular flight pattern, the system may regenerate a new flight plan based on a constant recalculation of current position and local weather. In another embodiment, the integration may be executed by the FCC at the UAV.

In one embodiment, the SODAR and/or LIDAR data may be transmitted directly to the FCC, the FCC being configured to receive the SODAR and/or LIDAR data (and other inputs from the RF emitter) to perform flight pattern modification. For example, the FCC may be configured to execute a wind triangle method to determine the UAV's ground track vector and air speed vector, and the difference between the two may provide the local wind vector and may be used to correct or modify the SODAR and/or LIDAR data.

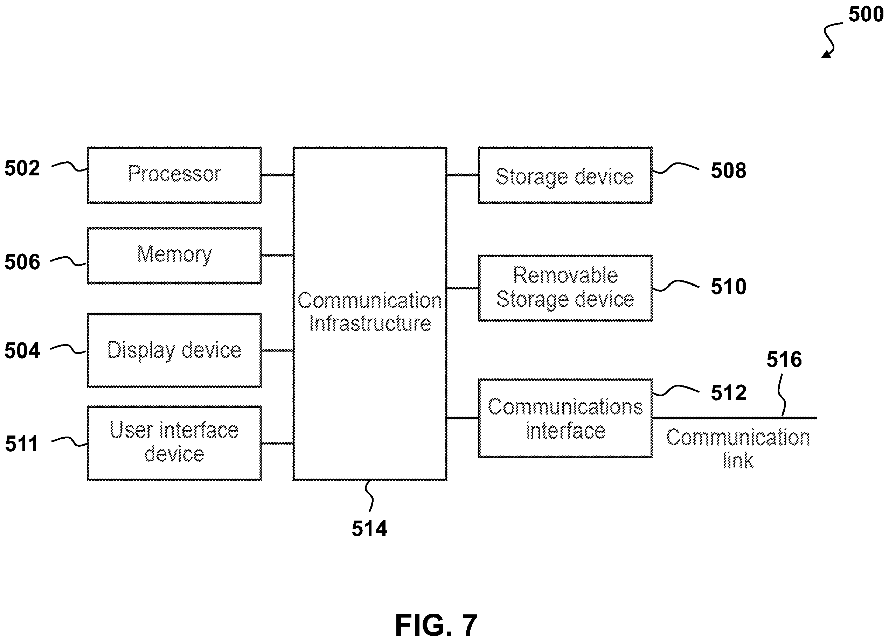

FIG. 7 is a high-level block diagram 500 showing a computing system comprising a computer system useful for implementing an embodiment of the system and process, disclosed herein. Embodiments of the system may be implemented in different computing environments. The computer system includes one or more processors 502, and can further include an electronic display device 504 (e.g., for displaying graphics, text, and other data), a main memory 506 (e.g., random access memory (RAM)), storage device 508, a removable storage device 510 (e.g., removable storage drive, a removable memory module, a magnetic tape drive, an optical disk drive, a computer readable medium having stored therein computer software and/or data), user interface device 511 (e.g., keyboard, touch screen, keypad, pointing device), and a communication interface 512 (e.g., modem, a network interface (such as an Ethernet card), a communications port, or a PCMCIA slot and card). The communication interface 512 allows software and data to be transferred between the computer system and external devices. The system further includes a communications infrastructure 514 (e.g., a communications bus, cross-over bar, or network) to which the aforementioned devices/modules are connected as shown.

Information transferred via communications interface 514 may be in the form of signals such as electronic, electromagnetic, optical, or other signals capable of being received by communications interface 514, via a communication link 516 that carries signals and may be implemented using wire or cable, fiber optics, a phone line, a cellular/mobile phone link, an radio frequency (RF) link, and/or other communication channels. Computer program instructions representing the block diagram and/or flowcharts herein may be loaded onto a computer, programmable data processing apparatus, or processing devices to cause a series of operations performed thereon to produce a computer implemented process.

Embodiments have been described with reference to flowchart illustrations and/or block diagrams of methods, apparatus (systems) and computer program products according to embodiments. Each block of such illustrations/diagrams, or combinations thereof, can be implemented by computer program instructions. The computer program instructions when provided to a processor produce a machine, such that the instructions, which execute via the processor, create means for implementing the functions/operations specified in the flowchart and/or block diagram. Each block in the flowchart/block diagrams may represent a hardware and/or software module or logic, implementing embodiments. In alternative implementations, the functions noted in the blocks may occur out of the order noted in the figures, concurrently, etc.

Computer programs (i.e., computer control logic) are stored in main memory and/or secondary memory. Computer programs may also be received via a communications interface 512. Such computer programs, when executed, enable the computer system to perform the features of the embodiments as discussed herein. In particular, the computer programs, when executed, enable the processor and/or multi-core processor to perform the features of the computer system. Such computer programs represent controllers of the computer system.

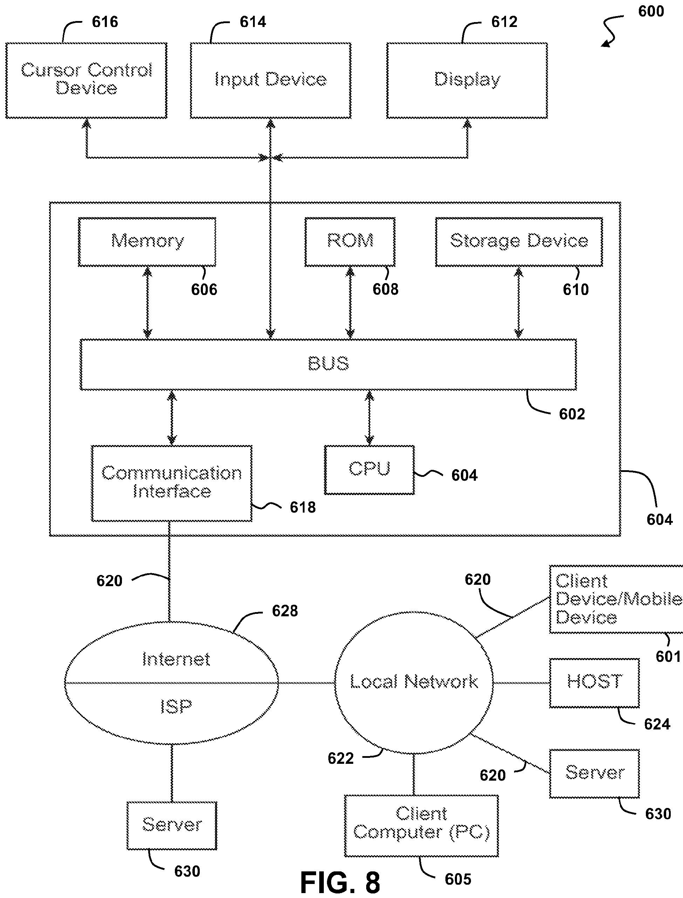

FIG. 8 shows a block diagram of an example system 600 in which an embodiment may be implemented. The system 600 includes one or more client devices 601 such as consumer electronics devices, connected to one or more server computing systems 630. A server 630 includes a bus 602 or other communication mechanism for communicating information, and a processor (CPU) 604 coupled with the bus 602 for processing information. The server 630 also includes a main memory 606, such as a random access memory (RAM) or other dynamic storage device, coupled to the bus 602 for storing information and instructions to be executed by the processor 604. The main memory 606 also may be used for storing temporary variables or other intermediate information during execution or instructions to be executed by the processor 604. The server computer system 630 further includes a read only memory (ROM) 608 or other static storage device coupled to the bus 602 for storing static information and instructions for the processor 604. A storage device 610, such as a magnetic disk or optical disk, is provided and coupled to the bus 602 for storing information and instructions. The bus 602 may contain, for example, thirty-two address lines for addressing video memory or main memory 606. The bus 602 can also include, for example, a 32-bit data bus for transferring data between and among the components, such as the CPU 604, the main memory 606, video memory and the storage 610. Alternatively, multiplex data/address lines may be used instead of separate data and address lines.

The server 630 may be coupled via the bus 602 to a display 612 for displaying information to a computer user. An input device 614, including alphanumeric and other keys, is coupled to the bus 602 for communicating information and command selections to the processor 604. Another type or user input device comprises cursor control 616, such as a mouse, a trackball, or cursor direction keys for communicating direction information and command selections to the processor 604 and for controlling cursor movement on the display 612.

According to one embodiment, the functions are performed by the processor 604 executing one or more sequences of one or more instructions contained in the main memory 606. Such instructions may be read into the main memory 606 from another computer-readable medium, such as the storage device 610. Execution of the sequences of instructions contained in the main memory 606 causes the processor 604 to perform the process steps described herein. One or more processors in a multi-processing arrangement may also be employed to execute the sequences of instructions contained in the main memory 606. In alternative embodiments, hard-wired circuitry may be used in place of or in combination with software instructions to implement the embodiments. Thus, embodiments are not limited to any specific combination of hardware circuitry and software.

The terms "computer program medium," "computer usable medium," "computer readable medium", and "computer program product," are used to generally refer to media such as main memory, secondary memory, removable storage drive, a hard disk installed in hard disk drive, and signals. These computer program products are means for providing software to the computer system. The computer readable medium allows the computer system to read data, instructions, messages or message packets, and other computer readable information from the computer readable medium. The computer readable medium, for example, may include non-volatile memory, such as a floppy disk, ROM, flash memory, disk drive memory, a CD-ROM, and other permanent storage. It is useful, for example, for transporting information, such as data and computer instructions, between computer systems. Furthermore, the computer readable medium may comprise computer readable information in a transitory state medium such as a network link and/or a network interface, including a wired network or a wireless network that allow a computer to read such computer readable information. Computer programs (also called computer control logic) are stored in main memory and/or secondary memory. Computer programs may also be received via a communications interface. Such computer programs, when executed, enable the computer system to perform the features of the embodiments as discussed herein. In particular, the computer programs, when executed, enable the processor multi-core processor to perform the features of the computer system. Accordingly, such computer programs represent controllers of the computer system.

Generally, the term "computer-readable medium" as used herein refers to any medium that participated in providing instructions to the processor 604 for execution. Such a medium may take many forms, including but not limited to, non-volatile media, volatile media, and transmission media. Non-volatile media includes, for example, optical or magnetic disks, such as the storage device 610. Volatile media includes dynamic memory, such as the main memory 606. Transmission media includes coaxial cables, copper wire and fiber optics, including the wires that comprise the bus 602. Transmission media can also take the form of acoustic or light waves, such as those generated during radio wave and infrared data communications.

Common forms of computer-readable media include, for example, a floppy disk, a flexible disk, hard disk, magnetic tape, or any other magnetic medium, a CD-ROM, any other optical medium, punch cards, paper tape, any other physical medium with patterns of holes, a RAM, a PROM, an EPROM, a FLASH-EPROM, any other memory chip or cartridge, a carrier wave as described hereinafter, or any other medium from which a computer can read.

Various forms of computer readable media may be involved in carrying one or more sequences of one or more instructions to the processor 604 for execution. For example, the instructions may initially be carried on a magnetic disk of a remote computer. The remote computer can load the instructions into its dynamic memory and send the instructions over a telephone line using a modem. A modem local to the server 630 can receive the data on the telephone line and use an infrared transmitter to convert the data to an infrared signal. An infrared detector coupled to the bus 602 can receive the data carried in the infrared signal and place the data on the bus 602. The bus 602 carries the data to the main memory 606, from which the processor 604 retrieves and executes the instructions. The instructions received from the main memory 606 may optionally be stored on the storage device 610 either before or after execution by the processor 604.

The server 630 also includes a communication interface 618 coupled to the bus 602. The communication interface 618 provides a two-way data communication coupling to a network link 620 that is connected to the world wide packet data communication network now commonly referred to as the Internet 628. The Internet 628 uses electrical, electromagnetic or optical signals that carry digital data streams. The signals through the various networks and the signals on the network link 620 and through the communication interface 618, which carry the digital data to and from the server 630, are exemplary forms or carrier waves transporting the information.

In another embodiment of the server 630, interface 618 is connected to a network 622 via a communication link 620. For example, the communication interface 618 may be an integrated services digital network (ISDN) card or a modem to provide a data communication connection to a corresponding type of telephone line, which can comprise part of the network link 620. As another example, the communication interface 618 may be a local area network (LAN) card to provide a data communication connection to a compatible LAN. Wireless links may also be implemented. In any such implementation, the communication interface 618 sends and receives electrical electromagnetic or optical signals that carry digital data streams representing various types of information.

The network link 620 typically provides data communication through one or more networks to other data devices. For example, the network link 620 may provide a connection through the local network 622 to a host computer 624 or to data equipment operated by an Internet Service Provider (ISP). The ISP in turn provides data communication services through the Internet 628. The local network 622 and the Internet 628 both use electrical, electromagnetic or optical signals that carry digital data streams. The signals through the various networks and the signals on the network link 620 and through the communication interface 618, which carry the digital data to and from the server 630, are exemplary forms or carrier waves transporting the information.

The server 630 can send/receive messages and data, including e-mail, program code, through the network, the network link 620 and the communication interface 618. Further, the communication interface 618 can comprise a USB/Tuner and the network link 620 may be an antenna or cable for connecting the server 630 to a cable provider, satellite provider or other terrestrial transmission system for receiving messages, data and program code from another source.

The example versions of the embodiments described herein may be implemented as logical operations in a distributed processing system such as the system 600 including the servers 630. The logical operations of the embodiments may be implemented as a sequence of steps executing in the server 630, and as interconnected machine modules within the system 600. The implementation is a matter of choice and can depend on performance of the system 600 implementing the embodiments. As such, the logical operations constituting said example versions of the embodiments are referred to for e.g., as operations, steps or modules.

Similar to a server 630 described above, a client device 601 can include a processor, memory, storage device, display, input device and communication interface (e.g., e-mail interface) for connecting the client device to the Internet 628, the ISP, or LAN 622, for communication with the servers 630.

The system 600 can further include computers (e.g., personal computers, computing nodes) 605 operating in the same manner as client devices 601, where a user can utilize one or more computers 605 to manage data in the server 630.

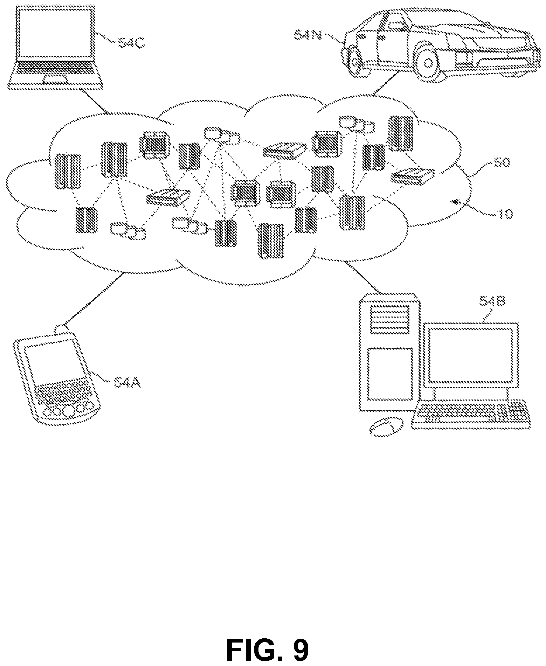

Referring now to FIG. 9, illustrative cloud computing environment 50 is depicted. As shown, cloud computing environment 50 comprises one or more cloud computing nodes 10 with which local computing devices used by cloud consumers, such as, for example, personal digital assistant (PDA), smartphone, smart watch, set-top box, video game system, tablet, mobile computing device, or cellular telephone 54A, desktop computer 54B, laptop computer 54C, and/or automobile computer system 54N may communicate. Nodes 10 may communicate with one another. They may be grouped (not shown) physically or virtually, in one or more networks, such as Private, Community, Public, or Hybrid clouds as described hereinabove, or a combination thereof. This allows cloud computing environment 50 to offer infrastructure, platforms and/or software as services for which a cloud consumer does not need to maintain resources on a local computing device. It is understood that the types of computing devices 54A-N shown in FIG. 9 are intended to be illustrative only and that computing nodes 10 and cloud computing environment 50 can communicate with any type of computerized device over any type of network and/or network addressable connection (e.g., using a web browser).

## Claims

1. A system (100), comprising:
at least one computing device (108) of a ground control station (104), the at least one computing device configured to:
determine a starting position for an unmanned aerial vehicle, UAV, (110) descent based on one or more local weather conditions, wherein the determining comprises back-calculating flight plan waypoints based on a nominal descent rate of the UAV, turn rate limitations, and the weather conditions, until the desired starting position is determined;
determine a flight pattern for landing the UAV based on the determined starting position for the UAV;
have the UAV fly the determined flight pattern; and
modify the determined flight pattern based on a change in the one or more local weather conditions and a current position of the UAV, wherein the modifying comprises regenerating a new flight plan based on a constant recalculation of the current position of the UAV and local weather conditions.

2. The system (100) of claim 1, further comprising:
at least one sensor (116) disposed proximate the ground control station (104), wherein the at least one sensor is in communication with the at least one computing device (108), and wherein the one or more local weather conditions comprise weather data from the at least one sensor, wherein the at least one sensor is a sonic detection and ranging, SODAR, sensor.

3. The system of claim 1, further comprising:
at least one sensor (116) disposed proximate the ground control station (104), wherein the at least one sensor is in communication with the at least one computing device (108), and wherein the one or more local weather conditions comprise weather data from the at least one sensor, wherein the at least one sensor is a light detection and ranging, LIDAR, sensor.

4. The system of claim 1, wherein the one or more local weather conditions comprise a wind speed and a wind speed gradient, and wherein the determined flight pattern comprises a glide slope, a nominal descent rate, a turn rate, and an altitude.

5. The system of claim 1, wherein the current position of the UAV (110) is based on a global positioning system, GPS, receiver (126) of the UAV in communication with one or more pseudolites (134) disposed proximate a landing area (102).

6. A method, comprising:
determining, by at least one computing device (108) of a ground control station (104), a starting position for an unmanned aerial vehicle, UAV, (110) descent based on one or more local weather conditions, wherein the determining comprises back-calculating flight plan waypoints based on a nominal descent rate of the UAV, turn rate limitations, and the weather conditions, until the desired starting position is determined;
determining, by the at least one computing device, a flight pattern for landing the UAV based on the determined starting position for the UAV;
having the UAV fly the determined flight pattern; and
modifying, by the at least one computing device, the determined flight pattern based on a change in the one or more local weather conditions and a current position of the UAV, wherein the modifying comprises regenerating a new flight plan based on a constant recalculation of the current position of the UAV and local weather conditions.

7. The method of claim 6, further comprising:
sending, by at least one sensor (116) disposed proximate the ground control station (104), the one or more local weather conditions from the at least one sensor to the at least one computing device (108), wherein the at least one sensor is a sonic detection and ranging, SODAR, sensor.

8. The method of claim 6, further comprising:
sending, by at least one sensor (116) disposed proximate the ground control station (104), the one or more local weather conditions from the at least one sensor to the at least one computing device (108), wherein the at least one sensor a light detection and ranging, LIDAR, sensor.

9. The method of claim 6, wherein the one or more local weather conditions comprise a wind speed and a wind speed gradient, and wherein the determined flight pattern comprises a glide slope, a nominal descent rate, a turn rate, and an altitude.

10. The method of claim 6, wherein the current position of the UAV (110) is based on a global positioning system, GPS, receiver (126) of the UAV in communication with one or more pseudolites (134) disposed proximate a landing area (102).

## Patentansprüche

1. System (100), umfassend:
mindestens eine Rechenvorrichtung (108) einer Bodenkontrollstation (104), wobei die mindestens eine Rechenvorrichtung dazu konfiguriert ist:
eine Startposition für den Sinkflug eines unbemannten Luftfahrzeugs, UAV (110) auf Basis einer oder mehrerer lokaler Wetterbedingungen zu bestimmen, wobei das Bestimmen das Rückberechnen von Flugplan-Wegpunkten auf Basis einer nominellen Sinkgeschwindigkeit des UAV, von Wendegeschwindigkeitsbeschränkungen und der Wetterbedingungen umfasst, bis die gewünschte Startposition bestimmt ist;
ein Flugmusters zum Landen des UAV auf Basis der bestimmten Startposition für das UAV zu bestimmen;
zu veranlassen, dass das UAV das bestimmte Flugmuster fliegt; und
das bestimmte Flugmuster auf Basis einer Änderung der einen oder mehreren lokalen Wetterbedingungen und einer aktuellen Position des UAV zu modifizieren, wobei das Modifizieren das Neugenerieren eines neuen Flugplans auf Basis einer ständigen Neuberechnung der aktuellen Position des UAV und der lokalen Wetterbedingungen umfasst.

2. System (100) nach Anspruch 1, weiter umfassend:
mindestens einen Sensor (116), welcher in der Nähe der Bodenkontrollstation (104) angeordnet ist, wobei der mindestens eine Sensor mit der mindestens einen Rechenvorrichtung (108) kommuniziert, und wobei die eine oder mehreren lokalen Wetterbedingungen Wetterdaten von dem mindestens einen Sensor umfassen, wobei der mindestens eine Sensor ein SODAR-Sensor (Sonic Detection and Ranging) ist.

3. System nach Anspruch 1, weiter umfassend:
mindestens einen Sensor (116), welcher in der Nähe der Bodenkontrollstation (104) angeordnet ist, wobei der mindestens eine Sensor mit der mindestens einen Rechenvorrichtung (108) kommuniziert, und wobei die eine oder mehreren lokalen Wetterbedingungen Wetterdaten von dem mindestens einen Sensor umfassen, wobei der mindestens eine Sensor ein LIDAR-Sensor (Light Detection and Ranging) ist.

4. System nach Anspruch 1, wobei die eine oder mehreren lokalen Wetterbedingungen eine Windgeschwindigkeit und einen Windgeschwindigkeitsgradienten umfassen, und wobei das bestimmte Flugmuster einen Gleitweg, eine nominelle Sinkgeschwindigkeit, eine Wendegeschwindigkeit und eine Höhe umfasst.

5. System nach Anspruch 1, wobei die aktuelle Position des UAV (110) auf einem globalen Positionsbestimmungssystem, GPS-Empfänger (126) des UAV in Kommunikation mit einem oder mehreren Pseudoliten (134) basiert, welche in der Nähe eines Landebereichs (102) angeordnet sind.

6. Verfahren, umfassend:
Bestimmen einer Startposition für den Sinkflug eines unbemannten Luftfahrzeugs (UAV) (110) auf Basis einer oder mehrerer lokaler Wetterbedingungen durch mindestens eine Rechenvorrichtung (108) einer Bodenkontrollstation (104), wobei das Bestimmen das Rückberechnen von Flugplan-Wegpunkten auf Basis einer nominellen Sinkgeschwindigkeit des UAV, von Wendegeschwindigkeitsbeschränkungen und der Wetterbedingungen umfasst, bis die gewünschte Startposition bestimmt ist;
Bestimmen eines Flugmusters zum Landen des UAV auf Basis der bestimmten Startposition für das UAV durch die mindestens eine Rechenvorrichtung;
Veranlassen, dass das UAV das bestimmte Flugmuster fliegt; und
Modifizieren des bestimmten Flugmusters auf Basis einer Änderung der einen oder mehreren lokalen Wetterbedingungen und einer aktuellen Position des UAV durch die mindestens eine Rechenvorrichtung, wobei das Modifizieren das Neugenerieren eines neuen Flugplans auf Basis einer ständigen Neuberechnung der aktuellen Position des UAV und der lokalen Wetterbedingungen umfasst.

7. Verfahren nach Anspruch 6, weiter umfassend:
Senden der einen oder mehreren lokalen Wetterbedingungen von dem mindestens einen Sensor an die mindestens eine Rechenvorrichtung (108) durch den mindestens einen Sensor (116), welcher in der Nähe der Bodenkontrollstation (104) angeordnet ist, wobei der mindestens eine Sensor ein SODAR-Sensor (Sonic Detection and Ranging) ist.

8. Verfahren nach Anspruch 6, weiter umfassend:
Senden der einen oder mehreren lokalen Wetterbedingungen von dem mindestens einen Sensor an die mindestens eine Rechenvorrichtung (108) durch den mindestens einen Sensor (116), welcher in der Nähe der Bodenkontrollstation (104) angeordnet ist, wobei der mindestens eine Sensor ein LIDAR-Sensor (Light Detection and Ranging).

9. Verfahren nach Anspruch 6, wobei die eine oder mehreren lokalen Wetterbedingungen eine Windgeschwindigkeit und einen Windgeschwindigkeitsgradienten umfassen, und wobei das bestimmte Flugmuster einen Gleitweg, eine nominelle Sinkgeschwindigkeit, eine Wendegeschwindigkeit und eine Höhe umfasst.

10. Verfahren nach Anspruch 6, wobei die aktuelle Position des UAV (110) auf einem globalen Positionsbestimmungssystem, GPS-Empfänger (126) des UAV in Kommunikation mit einem oder mehreren Pseudoliten (134) basiert, welche in der Nähe eines Landebereichs (102) angeordnet sind.

## Revendications

1. Système (100), comprenant :
au moins un dispositif informatique (108) d'une station de commande au sol (104), le au moins un dispositif informatique étant configuré pour :
déterminer une position de départ pour une descente d'un véhicule aérien sans pilote (UAV) (110) sur la base d'une ou plusieurs conditions météorologiques locales, dans lequel la détermination comprend un rétro-calcul de points de cheminement de plan de vol sur la base d'une vitesse de descente nominale de l'UAV, de limitations de vitesse de virage, et des conditions météorologiques, jusqu'à ce que la position de départ souhaitée soit déterminée ;
déterminer un plan de vol pour l'atterrissage de l'UAV sur la base de la position de départ déterminée pour l'UAV ;
présenter à l'UAV le plan de vol déterminé ; et
modifier le plan de vol déterminé sur la base d'un changement dans les une ou plusieurs conditions météorologiques locales et une position actuelle de l'UAV, dans lequel la modification comprend une régénération d'un nouveau plan de vol sur la base d'un nouveau calcul constant de la position actuelle de l'UAV et des conditions météorologiques locales

2. Système (100) selon la revendication 1, comprenant en outre :
au moins un capteur (116) disposé à proximité de la station de commande au sol (104), dans lequel le au moins un capteur est en communication avec le au moins un dispositif informatique (108), et dans lequel les une ou plusieurs conditions météorologiques locales comprennent des données météorologiques provenant du au moins un capteur, dans lequel le au moins un capteur est un capteur de détection et de télémétrie par le son, SODAR.

3. Système selon la revendication 1, comprenant en outre :
au moins un capteur (116) disposé à proximité de la station de commande au sol (104), dans lequel le au moins un capteur est en communication avec le au moins un dispositif informatique (108), et dans lequel les une ou plusieurs conditions météorologiques locales comprennent des données météorologiques provenant du au moins un capteur, dans lequel le au moins un capteur est un capteur de détection et de télémétrie par la lumière, LIDAR.

4. Système selon la revendication 1, dans lequel les une ou plusieurs conditions météorologiques locales comprennent une vitesse de vent et un gradient de vitesse de vent, et dans lequel le plan de vol déterminé comprend une pente de descente, une vitesse de descente nominale, une vitesse de virage et une altitude.

5. Système selon la revendication 1, dans lequel la position actuelle de l'UAV (110) est basée sur un récepteur de système de positionnement global, GPS (126) de l'UAV en communication avec un ou plusieurs pseudolites (134) disposés à proximité d'une zone d'atterrissage (102).

6. Procédé, comprenant :
la détermination, par l'intermédiaire d'au moins un dispositif informatique (108), d'une station de commande au sol (104), une position de départ pour une descente d'un véhicule aérien sans pilote (UAV) (110) sur la base d'une ou plusieurs conditions météorologiques locales, dans lequel la détermination comprend un rétro-calcul de points de cheminement de plan de vol sur la base d'une vitesse de descente nominale de l'UAV, de limitations de vitesse de virage, et des conditions météorologiques, jusqu'à ce que la position de départ souhaitée soit déterminée ;
la détermination, par l'intermédiaire d'au moins un dispositif informatique, d'un plan de vol pour l'atterrissage de l'UAV sur la base de la position de départ déterminée pour l'UAV ;
la présentation à l'UAV du plan de vol déterminé ; et
la modification, par l'intermédiaire d'au moins un dispositif informatique, du plan de vol déterminé sur la base d'un changement dans les une ou plusieurs conditions météorologiques locales et une position actuelle de l'UAV, dans lequel la modification comprend une régénération d'un nouveau plan de vol sur la base d'un nouveau calcul constant de la position actuelle de l'UAV et des conditions météorologiques locales.

7. Procédé selon la revendication 6, comprenant en outre :
l'envoi, par l'intermédiaire d'au moins un capteur (116) disposé à proximité de la station de commande au sol (104), des une ou plusieurs conditions météorologiques locales à partir du au moins un capteur vers le au moins un dispositif informatique (108), dans lequel le au moins un capteur est un capteur de détection et de télémétrie par le son, SODAR.

8. Procédé selon la revendication 6, comprenant en outre :
l'envoi, par l'intermédiaire d'au moins un capteur (116) disposé à proximité de la station de commande au sol (104), des une ou plusieurs conditions météorologiques locales à partir du au moins un capteur vers le au moins un dispositif informatique (108), dans lequel le au moins un capteur est un capteur de détection et de télémétrie par la lumière, LIDAR.

9. Procédé selon la revendication 6, dans lequel les une ou plusieurs conditions météorologiques locales comprennent une vitesse de vent et un gradient de vitesse de vent, et dans lequel le plan de vol déterminé comprend une pente de descente, une vitesse de descente nominale, une vitesse de virage et une altitude.

10. Procédé selon la revendication 6, dans lequel la position actuelle de l'UAV (110) est basée sur un récepteur de système de positionnement global, GPS (126) de l'UAV en communication avec un ou plusieurs pseudolites (134) disposés à proximité d'une zone d'atterrissage (102).
